(19) Europäisches Patentamt
European Patent Office
Office européen des brevets

(11) Publication number: **0 006 571**
**B1**

(12) # EUROPEAN PATENT SPECIFICATION

(45) Date of publication of patent specification: **06.07.83**

(21) Application number: **79102029.0**

(22) Date of filing: **19.06.79**

(51) Int. Cl.[3]: **C 09 D 5/34**, C 09 K 3/10, C 08 L 101/00, C 08 L 33/00, C 08 L 71/02, C 08 L 21/00

(54) **Plasticizer compositions comprising alkylene oxide-alkyl phenol adduct and ester plasticizer, and caulking compositions containing them.**

(30) Priority: **20.06.78 US 917436**

(43) Date of publication of application: **09.01.80 Bulletin 80/1**

(45) Publication of the grant of the patent: **06.07.83 Bulletin 83/27**

(84) Designated Contracting States: **BE CH DE FR GB IT NL SE**

(56) References cited:
**DE - A - 1 594 072**
**DE - A - 2 521 679**
**FR - A - 2 247 520**

(73) Proprietor: **Rohm and Haas Company**
**Independence Mall West**
**Philadelphia, Pennsylvania 19105 (US)**

(72) Inventor: **Jordan, Jr., Arthur David**
**810 Longfield Road**
**Philadelphia, Pa. 19118 (US)**
Inventor: **Lavelle, Joseph Arthur**
**R. D. No. 2**
**Coopersburg, Pa. 18036 (US)**

(74) Representative: **Deufel, Paul, Dr. et al,**
**Patentanwälte Müller-Boré, Deufel Schön, Hertel**
**Siebertstrasse 4 Postfach 860720**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

**EP 0 006 571 B1**

# Plasticizer compositions comprising alkylene oxide-alkyl phenol adduct and ester plasticizer and caulking compositions containing them

This invention is concerned with plasticizing compositions comprising certain alkylene oxide-alkyl phenol adducts and ester plasticizers and caulking or sealant compositions containing them. The caulks or sealants may be used for filling structural joints in buildings.

US—A—2 865 877 and 2 865 878 disclose coating compositions comprising a water soluble salt of a maleic anhydride/olefin copolymer and a water insoluble condensate of ethylene oxide and a $C_8$—$C_{18}$ alkyl phenol, the condensate containing an average of 1 to 5 oxyethylene units. The condensate may have a plasticizing effect on the copolymer and the two materials can serve as the sole binder in coatings, or can be used with acrylic polymers in dispersed or solubilized form. The water soluble salts are extremely hard and inflexible and are unsuitable as major components of caulks.

US—A—2 889 297 discloses permanently tacky polyvinylacetate adhesives plasticized with polyglycol ethers of phenols which are similar to the adducts used in this invention.

US—A—3 554 942 discloses aqueous spackling (masonry filler) or sealant compositions comprising water soluble acrylic copolymer and a water soluble cellulose ether.

US—A—3 561 996 discloses caulking compositions comprising thermoplastic polymer and, as adhesion promoter, certain silanes. One specific example in the patent describes a caulking composition of 82.6% solids formulated by mixing 195.1 kg of a 55% aqueous dispersion of an emulsion copolymer of 81.5% ethylacrylate, 15% methylmethacrylate and 3.5% itaconic acid; 4.29 kg of tert-octylphenoxypoly(39)ethoxy ethanol; 4.83 kg of sodium hexametaphosphate; 56.34 kg of plasticiser for the copolymer (an oxypropylene derivative of m,p-cresylic acid); 12.21 kg mineral spirits; 0.576 kg of 30% aqueous polymethacrylic acid; 313.9 kg of pigment grade calcium carbonate extender and 7.81 kg of titanium dioxide pigment.

US—A—3 759 915, 3 786 020 and 3 919 146 disclose caulks and sealants comprising polymer containing units having air curable radicals. The compositions are generally organic solvent based and may also contain oil modified alkyd or maleic polyester plasticizers.

As noted above, acrylic latex caulks have been proposed in the past in which a plasticizer is recommended, the plasticizer being an adduct of propylene oxide and cresol in a mole ratio of 6:1.

Aqueous caulks prepared from emulsion vehicles which are predominently acrylate or vinyl acetate require substantial amounts of plasticizer if they are to perform acceptably. The plasticizer enables the wet caulk to resist cracking as it dries and the dried, cured caulk to maintain its integrity and adhesion in the joint as it is subjected to stresses produced, for example, by temperature fluctuations.

Caulk properties determined in the laboratory which bear directly on performance under use conditions are hardness, low temperature flexibility, tensile strength and % elongation. In addition to these properties the plasticizer should lend itself to production of caulks of low and stable consistency at normal solids content and should have low cost.

Plasticizers presently in use in caulks are usually of two general types. One type, representing the greater volume of plasticizer used consists of relatively non-volatile monomeric esters such as the dialkyl phthalates and glycol dibenzoates. While such plasticizers are inexpensive, caulks containing them are generally deficient in one or more properties. The other type is certain aromatic polyethers which may provide improved properties but are relatively expensive.

We have now found that plasticizers consisting essentially of certain alkylene oxide alkylphenol adducts and ester plasticizers are useful in caulks containing an elastomeric synthetic polymer binder (as distinguished from the hard polymers for coatings mentioned above) especially latex addition polymers prepared by emulsion polymerization (although solvent-based caulks may also be used). We have also found, surprisingly, that the plasticizer properties and consistency of the compositions of this invention are generally better than either component alone.

According to the invention there is provided a putty-like mastic, caulking or sealant composition containing a binder comprising an elastomeric synthetic polymer containing free carboxylic groups and having a Tg below 10°C and a water insoluble plasticizer, in the weight ratio of plasticizer to binder of from 0.01:1 to 5:1, and optionally one or more additives in the form of an emulsifier, a dispersant, a base, a defoamer, a thickener, an organic solvent in the latex system, a dye, a pigment, a filler and an adhesion promoter wherein the plasticizer comprises (1) water-insoluble or water-immiscible adduct of ethylene oxide and/or propylene oxide with alkyl phenol, said adduct having the formula:

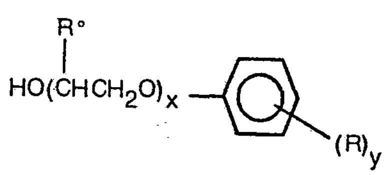

Formula I

in which R° is H or $CH_3$, preferably H,

x is an average number of from 1 to 7, preferably 2 to 6, more preferably 3 to 5,

R is $C_1$ to $C_{12}$ alkyl, preferably $C_4$ to $C_{12}$ alkyl, more preferably $C_8$ to $C_{10}$ alkyl,

y is 1 or 2, preferably 1, and (2) a water insoluble plasticizer being an ester containing 2 to 4 carboxylic ester groups obtainable by reacting monoalcohol and aliphatic and/or aromatic polycarboxylic acid, or ester of such acid, or by reacting a glycol with monocarboxylic acid, the weight ratio of (1) to (2) being from 10:90 to 90:10, preferably from 15:85 to 60:40, and the consistency of the composition being from 5 to 100 seconds, more preferably 10 to 50 seconds, most preferably 10 to 35 seconds. Compositions are preferred in which R° is H and R is $C_4$—$C_{12}$ alkyl. Preferably x is 3 to 5 and r is $C_8$—$C_{10}$ alkyl.

Preferred water-insoluble ester plasticizers for a balance of cost, availability and performance are one or more of those having the formulae:

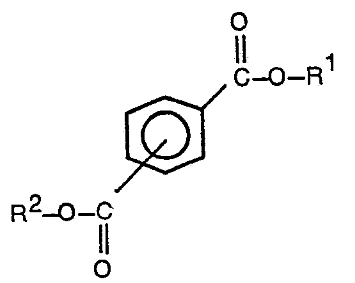

Formula II

wherein

$R^1$ and $R^2$ are the same or different radicals and are $C_4$—$C_{12}$ alkyl,

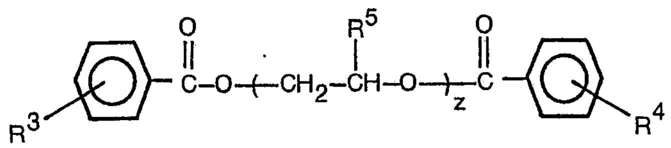

Formula III

wherein

$R^3$ and $R^4$ are the same or different radicals and are H or $C_1$—$C_{10}$ alkyl,

$R^5$ is H or $CH_3$, and

z is 1 to 3,

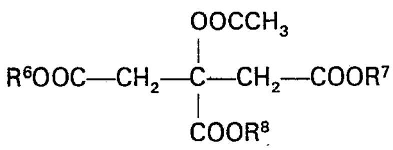

Formula IV

wherein

$R^6$, $R^7$ and $R^8$ are the same or different radicals and are $C_1$—$C_8$ alkyl, and

$$R^9OOC—(CH_2)_m—COOR^{10}$$

Formula V

wherein

$R^9$ and $R^{10}$ are the same or different radicals and are $C_1$—$C_{10}$ alkyl, and

m is 2—8.

In the compounds of Formula I, the ring position of the radical R preferably is predominantly *para* to the alkylene oxide substituent. The products used in the examples herein are such that y is is predominantly 1, and the alkyl radical R is predominantly *para* to the alkylene oxide substituent. This water-insoluble ethylene oxide or propylene oxide condensate of the higher alkylphenol may be that derived from alkylphenols in which the alkyl group R may be methyl, isobutyl, n-octyl, t-octyl, nonyl, or dodecyl. The alkyl group is preferably of branched-chain character, such as in the case of *t*-octyl (1,1,3,3-tertramethyl butyl and 1,3,5-trimethyl hexyl ("nonyl"). Those condensates having an average of 5 or less oxyalkylene units (x is 5 or less, preferably 3 to 5) are generally the most advantageous, since they are more hydrophobic and are characterised by freedom from foaming and minimum sensitivity to water. While the value of x is an average number, the distribution, or deviation from a given value of x, is such that the material of Formula I is water-immiscible. Similar alkylene oxide adducts have been used in the past as surfactants to disperse pigments in coating compositions. The ester plasticizer (2) is conventional as a plasticizer for polymeric materials, and is prepared by known methods. Thus, the ester may be prepared by reaction of a monohydric alcohol with an aliphatic or aromatic polycarboxylic acid or an ester of such acid, or by reaction of a polyhydric alcohol and an aliphatic or aromatic monocarboxylic acid or an ester of such acid. For example, esters of Formula II can be prepared from phthalic, isophthalic, or terephthalic acids or lower (e.g. $C_1$—$C_4$) esters thereof, such

as the methyl ester, and n-butanol, t-octanol, 2-ethylhexanol, isooctanol, dodecanol, or mixed alkanols. Compounds of Formula III can be prepared from diethylene glycol, triethylene glycol or tripropylene glycol and benzoic acid. Butyl, otcyl, and ethylhexyl are typical alkyl substituents in Formula IV. Suitable alkyl groups in Formula V may be derived from the corresponding alkanols as noted above for the other formulae, and for Formula V materials, suitable dicarboxylic acids are adipic and sebacic.

When either the material of Formula I or a material of one of Formulae II—V is used alone (as is shown by the Examples), the caulks are not wholly satisfactory in respect of properties such as low temperature flexibility, plasticizer efficiency, plasticizer permanence, consistency or viscosity, wood channel cracking or acceptable cost. Compounds of Formula I in which x is greater than about 7, e.g. an average of 8.0 to 10, become progressively more water sensitive. While such water soluble alkylene oxide adducts may appear to be satisfactory in the initial caulk, with weathering, the caulk loses the compound by leaching and becomes hard. The consistency or viscosity of the caulk increases as the value of x decreases; thus the most preferred values of x are 3—5. At any value of x in the range of 1—7, compounds of Formula I where R° is H cannot be used in the absence of the ester plasticizers of Formulas II—V, because of this increased viscosity. If a volatile diluent such as water is used in large quantities to assuage the viscosity problem, shrinkage of the caulk upon drying is too great.

The weight ratio of adduct/polyester plasticizer elastomeric binder solids in the compositions of the invention is from 0.01:1 to 5:1, preferably from 0.05:1 to 2:1. The weight ratio of inorganic pigment and/or filler to elastomeric binder is from 0.1 (clear or translucent) to 5:1, such as 1:1 to 5:1, preferably 1:1 to 4:1, more preferably 1.5:1 to 3:1.

In the plasticizer composition, the weight ratio of (1) to (2) is from 10:90 to 90:10, preferably from 15:85 to 60:40, more preferably 20:80 to 30:70, provided that a useful consistency is obtained and the cured caulk flexibility is satisfactory.

Preferably the compositions contain pigment and/or filler in a weight ratio to elastomer of from 1:1 to 5:1 in which the weight ratio of component (1) to component (2) is from 15:85 to 60:40 and the consistency is from 10 to 50 seconds.

Consistency of the formulated caulk, determined in the manner described below, is from 5 to 100 seconds, preferably 10—50 seconds, and most preferably 10—35 seconds.

Caulking compositions must be fluid enough as measured by consistency to be applied easily, and yet must not slump or flow to a great extent after being applied to the substrate, nor shrink excessively upon drying or curing. A significant compositional feature of caulks to give these properties is the solids content, "solids" being defined as the total materials present which are nonvolatile under ordinary conditions of use. For aqueous latex based caulking or sealing compositions according to the invention, the solids content should be from 65% to 90% by weight, preferably at least 75%, such as 75% to 85%, more preferably from 80% to 85%. Solids content is kept as high as possible while achieving a useful consistency. Organic solvent based sealants or caulks according to the invention also have as low a nonvolatile content as is possible, usually less than 15%, and greater than 5%, while providing a useable viscosity or consistency. If the solvent is a reactive or curable solvent such as a drying oil or a liquid polymerizable material, solids content may even be 100%.

The binder may be formed of any organic solvent based or aqueous latex based elastomeric material, especially an aqueous latex of addition polymer of olefinically unsaturated monomers. Silicone rubbers and 1,3-diene rubbers such as styrene-butadiene copolymer latexes or butadiene-acrylonitrile latex polymers are examples of suitable binders.

However, preferred compositions of the present invention, especially aqueous caulks and sealants, contain a vinyl addition polymer binder, preferably one predominantly (more than 50% by weight) of 1,3-diene, vinyl acetate or (meth)acrylic ester, such as polyvinyl acetate and copolymers of vinyl acetate with 0.5 to 40% by weight of acid, such as acrylic acid, methacrylic acid, maleic acid, fumaric acid, itaconic acid, crotonic acid, acryloxyacetic acid and methacryloxypropionic acid and vinyl acetate-ethylene copolymers containing, for instance, 30—90% by weight of vinyl acetate units.

More preferred, for a desirable balance of properties, is polymer containing units of at least one ester of acrylic and/or methacrylic acid with at least one alkanol or alkoxyalkanol containing up to 14 carbon atoms.

Especially preferred elastomers are the polymers of acrylic acid esters, methacrylic acid esters, copolymers of two or more such esters with each other, copolymers of one or more such esters with each other, and also copolymers of one or more such esters with one or more of the following monoethylenically unsaturated compounds: vinyl acetate, vinyl chloride, vinylidene chloride, acrylonitrile, styrene, vinyltoluene, acrylamide, methacrylamide or of any of the acids mentioned above as components of vinyl acetate copolymers.

The most important of the acrylic esters are: ethyl acrylate, methyl acrylate, methyl methacrylate, butyl acrylate and methacrylate, and 2-ethylhexyl acrylate and methacrylate. Copolymers of these esters may be used, especially copolymers of one or more of these esters with 0.5 to 40% by weight of one of the acids mentioned above, preferably of acrylic acid, methacrylic acid, or itaconic acid.

High molecular weight polymers, e.g. 10,000 to several millions, obtained by emulsion polymerisation and of water-insoluble character under neutral or acid conditions are generally used in such caulking compositions. The elastomer preferably has a molecular weight of 10,000 to 600,000.

When the vinyl polymer contains acid, it is generally neutralized partially or completely with ammonia or other volatile base, an alkali metal hydroxide, or an alkaline earth metal hydroxide. Examples of suitable caulking compositions in which the plasticizer composition of this invention may be used and acrylic latex elastomers which may be used in the caulks and sealants of this invention are disclosed in US—A—3 561 996.

The elastomers suitable for caulks and sealants are well known to those skilled in the art, as are methods of preparing them.

An important property of the solid elastomeric polymer is its $T_g$ and consequently the selection of monomers and their proportions depends upon their influence on the $T_g$. The $T_g$ of the polymer is below 10°C (i.e., it must give a rubbery product) more preferably below 0°C, and is most preferably below −10°C. "$T_g$" is a conventional criterion of polymer hardness and is described by Flory, "Principal of Polymer Chemistry", pp. 56 and 57 (1953), Cornell University Press. See also "Polymer Handbook", Brandrup and Immergut, Sec. III, pp. 61—63, Interscience (1966). While actual measurement of the $T_g$ is preferred, it may be calculated as described by Fox, Bull. Am. Physics Soc. 1, 3, p 123 (1956). Examples of the $T_g$ of homopolymers and the inherent $T_g$ thereof which permits such calculations are as follows:

| Homopolymer of | $T_g$ |
|---|---|
| n-octyl acrylate | −80°C |
| n-decyl methacrylate | −60°C |
| 2-ethylhexyl acrylate | −70°C |
| n-butyl acrylate | −56°C |
| octyl methacrylate | −20°C |
| methyl acrylate | 9°C |
| t-butyl acrylate | 43°C |
| methyl methacrylate | 105°C |
| acrylic acid | 106°C |

These or other monomers may be blended to give the desired $T_g$ of the copolymer.

Preferably, the caulk and sealant compositions of the invention contain one or more of pigment, dye and filler. Fillers or pigments, if used, are present in an amount depending upon the consistency desired and the presence or absence of thickening agents. Suitable inert fillers and pigments include calcite, limestone (calcium carbonate), mica, talc, asbestos fiber or powder, diatomaceous earth, barytes, alumina, slate flour, calcium silicate, clay, colloidal silica, magnesium carbonate, titanium dioxide, carbon black, iron oxide, chrome green, phthalocyanine blue and magnesium silicate. The amounts of solvent, if any, filler, if any, and polymer solids are such as to give the caulking or sealant composition a putty-like or dough-like consistency.

The usual surfactants and emulsifiers commonly used in preparing or formulating latex polymers may be present. These include anionic, nonionic, and cationic materials.

It is helpful, in some cases, to use a silane to improve wet adhesion to glass by the caulk. Suitable silanes include vinyltriethoxysilane, $\gamma$-methacryloxypropyltrimethoxysilane, $\gamma$-mercaptotrimethoxysilane, $\gamma$-glycidoxypropyltrimethoxysilane, $\beta$-(3,4-epoxycyclohexyl)ethyltrimethoxysilane, $\gamma$-aminopropyltriethoxysilane, and N-(dimethoxymethylsilylisobutyl)-ethylenediamine. The silane may comprise from 0.05 percent to 0.5 percent by weight of the total caulking composition. Higher amounts may be used but do not result in proportional improvements in adhesion.

A base may be present as noted above, for example to neutralize carboxylic acid groups occurring in the elastomeric polymer. Suitable is a volatile base such as ammonia or a volatile water-soluble amine such as dimethylamine, triethylamine, triethanolamine, morpholine, N-methyl morpholine or picoline as well as inorganic bases.

The caulks and sealants of the invention may be contained in plastic lined paper tubes and may be for interior or exterior use to seal crevices and gaps, such as by a bead between two substrates to be joined, such as around windows, doors and bathroom appliances.

This invention also provides a plasticizing composition which comprises (1) water insoluble adduct of ethylene and/or propylene oxide with alkyl phenol, said adduct having the formula:

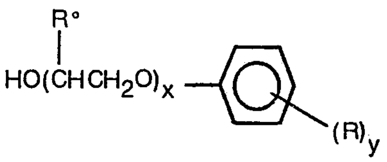

Formula I

in which R° is H or $CH_3$, preferably H,

x is an average number of from 1 to 7, preferably 2 or 6, more preferably 3 to 5,

R is $C_1$—$C_{12}$ alkyl, preferably $C_4$—$C_{12}$ alkyl, more preferably $C_8$—$C_{10}$ alkyl, and

y is 1 or 2, preferably 1, and (2) a water insoluble plasticizer being an ester containing 2 to 4 carboxylic ester groups obtainable by reacting a monoalcohol and aliphatic and/or aromatic polycarboxylic acid, or ester of such acid, or by reacting a glycol with a monocarboxylic acid, the weight ratio of (1) to (2) being from 10:90 to 90:10, preferably 15:85 to 60:40, more preferably 20:80 to 30:70.

Preferred compositions are those in which R° is H and R is $C_4$—$C_{12}$ alkyl.

More preferred compositions are those in which x is 3 to 5 and R is $C_8$—$C_{10}$ alkyl.

Component (2) is preferably an ester of one or more of Formulae II, III, IV and V above, especially preferred is dioctyl phthalate for low cost.

The same preferences and description of components (1) and (2) given above in respect of the caulking and sealant compositions also applies to the plasticizer compositions comprising these two components.

## Test Methods

The test methods for determining the properties specified in the following examples are well known in the art and may be found in US—A—3 561 996 and 3 919 146 and Resin Review, V, XVI, No. 3, (1966) "Test Procedures for Evaluating Aqueous Caulking Components and Elastomeric Solvent-Base Sealants", Rohm and Haas Company, Philadelphia 19105.

Consistency — The test method is that of U.S. Federal Specification TTS—00230. A sample of compound and a 177.4 ml conventional cylindrical caulking tube (15.24 x 4 cm outside diameter) are conditioned for at least 16 hours under standard conditions (25±1.1°C, relative humidity 50±5%). At the end of the conditioning period the tube with plunger in place is filled to capacity with compound from the nozzle end and placed in an air-powered Semco caulking gun. A standard Semco nozzle with a 3.18 mm diameter orifice (used in all the following examples) is attached to the cartridge. The compound is then gunned at 35153 kg $m^{-2}$ pressure into an empty container while a stopwatch is used to time the extrusion through the orifice. Gunning time is recorded in seconds. For solvent-base sealants, the procedure is the same except that no nozzle is attached to the cartridge and extrusion is through a 11.18 mm orifice.

Wood Channel Cracking — White pine channels 19.05 mm wide by 9.53 mm deep are filled with caulk and the surface of the caulk is levelled flush with the wood channels. The filled channels are then allowed to dry under the specified conditions (e.g. at 50°C for seven days) and the condition of caulk is assessed for cracking. Each test gives comparable results.

Low Temperature Flexibility — A slab of caulk 6.35 x 38.1 x 114.3 mm when wet is cast atop a 0.79 x 66.7 x 146.1 mm aluminium sheet using a brass frame which is filled with excess caulk applied with a caulk gun and levelled off with a tongue depresser blade. The frame is removed and the sample is stored for a week under the standard conditions. The sample is then transferred to an oven for another week at 50°C for cure. Subsequently the sample is placed in a refrigerated box at the specified temperature and equilibrated for at least one hour. The sample is then slowly bent in sequence over mandrels of diameter 101.6 mm, 50.8 mm, 25.4 mm and finally bent through 180° upon itself. (This sequence is abbreviated where noted in the examples). Any cracking is taken as an indication of failure.

Shore "A" Hardness — A sample of compound is stored for 16 to 24 hours at the standard conditions. A brass frame with inside dimensions 38.1 mm wide by 127 mm long by 6.35 mm deep is centred in a 76.2 mm by 152.4 mm plate of 16 to 24 gauge aluminium and filled with the conditioned compound. Excess compound is struck off with a flat spatula. A thin knife is then run along the inside edge of the frame to free the compound, and the frame is removed. Two such specimens are prepared and allowed to cure at the standard conditions for 14 days.

After the curing, Shore "A" hardness measurements are made with a Shore Durometer. Three readings are taken on each specimen and the average of the six readings is the accepted value. Readings are taken by the instantaneous method, using 1-kilogram pressure.

Tensile Strength and Elongation — A sample of compound is stored for 16 to 24 hours at the standard conditions. A brass frame with inside dimensions 76.2 mm wide by 127 mm long by 6.35 mm deep is placed on a Teflon-coated steel plate and filled with the conditioned compound. Excess compound is struck off with a flat spatula. A thin knife is then run along the inside edge of the frame to

free the compound, and the frame is removed. The prepared specimen is then air-cured at the standard conditions until it is cured through. (Not less than 2 weeks). When cure is complete, the specimen is cut with a dumbbell-shaped die measuring 76.2 mm long by 19.05 mm wide and having a neck width of 6.35 mm.

The Instron Tensile Tester is then used to determine the tensile and elongation properties of the dumbbell-shaped specimen of cured compound, at the following settings:

| | |
|---|---|
| Crosshead speed | 5.08 mm/min. |
| Chart speed | 5.08 mm/min. |
| Gauge length | 12.7 mm opening |
| Calibration | variable, according to compound |
| Integrator | automatic |

Results can be computed with the following formulas:

Tensile Strength

$$T = \frac{f}{tw}$$

where T = tensile strength in kg $m^{-2}$
f = force at break in kg
w = sample width in m
t = sample thickness in m

Elongation

$$E = \frac{100(l - l_o)}{l_o}$$

where E = percent elongation
$l_o$ = gauge length
l = length of sample at break

Slump — A sample of compound is stored for 16 to 24 hours at the standard conditions. A rectangular channel of 302 stainless steel with inside dimensions 19.05 mm wide by 152.4 mm long by 12.7 mm deep and with the bottom or long surface extended 50.8 mm at one end, is conditioned at the standard conditions for 1 hour. The channel is then filled with compound using a spatula and positioned vertically with the 50.8 mm extended portion down. At the end of 1 hour the sag of the compound at the lower end of the channel is measured to the nearest 1.6 mm.

Freeze Thaw Stability — A sample of compound is placed in an 227 ml glass jar, leaving at least 13 mm of air space at the top. The jar is capped and placed in a freezer at −10°C for 16 hours, then held at room temperature for 8 hours. This cycle is repeated twice, making three complete freeze-thaw cycles in all.

After each freeze-thaw cycle the consistency and pH of the sample are measured and any significant changes are noted. It is also an advisable precaution to run peel-adhesion tests on several substrates to ensure that no changes in adhesion properties have occurred.

180° Peel Adhesion — A 76.2 mm by 127 mm sample of each test surface is washed with detergent solution, rinsed with clear water, and finally cleaned with methyl ethyl ketone. Porous substrates should be at least 6.35 mm in thickness and should be virgin surfaces that have been brushed with a stiff-bristle paint brush to remove loose or foreign particles. The surfaces are primed if such treatment is demanded. After the test surfaces are clean, a strip of 25.4 mm Teflon masking tape is placed across the width of each in such a way that the lower edge of the tape is parallel to and at least 50.8 mm from the shorter edge of the test surface base.

A sample of compound that has been stored for 16 to 24 hours at the standard conditions is spread with a spatula or forced in a heavy bead from a caulking gun to give a thickness of not less than 3.18 mm over the entire area of the test surface. Spare bases of the same thickness as the test surface base are placed on either side of the test base, butting against it. Spacer bars measuring 50.8 mm wide by 152.4 mm long by 1.59 mm thick are placed on the assembly in such a way that they just bridge the joints between the test base and the spare bases on either side. Two 25.4 mm by 254 mm strips of

desized, grade-A airplane fabric (0.133 kg per metre, 80/84 thread count) are laid lengthwise over the specimen of compound. The entire assembly is then covered with a 254 mm by 304.8 mm sheet of 25.4 $\mu$m Mylar, which serves as a release member. A cylinder of practical size and sufficiently rigid to depress the compound when pressure is applied is rolled across the assembly, in such a manner as to avoid entrapping air, until the thickness of the compound between the cloth and the test surface is reduced from 1.59 mm. The Mylar sheet is then withdrawn carefully so that the assembly beneath is not disturbed. When the compound has set up to a point where no distortion of the test structure will occur, a thin (0.79 mm or less) coating of compound is applied over the cloth strips to protect against moisture and to minimize adhesion failure between the cloth and the compound specimen.

Following preparation the test specimens are allowed to air-cure for 7 days at the standard conditions. The specimens are then divided into two lots, one lot receiving an additional 7 days' cure at the standard conditions and the other lot being completely immersed in distilled water at the standard conditions for 7 days. Immediately following this 14-day cure, the specimens which have been immersed in water are removed and wiped dry.

For compounds which do not reach full cure in 2 weeks at standard conditions, the following accelerated curing technique is employed. The samples are cured for 3 days at the standard conditions, then for 7 days at 87.78°C. The specimens are divided into two lots, with one lot being tested immediately and the other lot receiving 7 days' additional cure immersed in water before testing.

Cured specimens of compound are prepared for testing by cutting the compound through to the test surface with a razor blade, along the edges of the cloth strips. The portions of compound on either side and between the cloth strips are removed from the test surface and discarded. The specimen is then placed in an Instron Tensile Tester and the cloth is pulled back on itself at an angle of 180° to peel the compound from the test surface. The rate of separation of the jaws of the machine is maintained at 50.8 mm per minute, giving a peel rate of 25.4 mm per minute. Care should be taken to run the integrator during a 25.4 mm length of delamination which does not include the initial or final periods of stress, to avoid shock of loading and decay. If the cloth strip begins to peel away from the compound during the test, the strip of compound is cut across with a sharp razor blade at that point in order to get separation at the interface between the compound and test surface. A minimum of five strips is tested for each condition (water soak and air cure) on each substrate.

The average peel strength in kg/m is obtained during each determination by using the integrator attachment and calculating by the following formula

$$P = \frac{XS}{X_o}$$

where P = average peel strength in kg/m
X = integrator reading over period of test
$X_o$ = integrator reading when full scale load is applied
S = full scale load in kg

Some preferred embodiments of the invention will now be more particularly described in any of the following examples in which all parts and percentages are by weight unless otherwise stated. Comparative examples are provided and noted as such.

In the following examples, the basic formulation given below was used, the difference being in the identity of the plasticizer. The abbreviations used have the following meanings; and in the example numbers "C" means a comparative example.

| Abbreviation | Meaning |
|---|---|
| X—1 | Adduct of Formula I, R° = $CH_3$, x = 6, y = 1, R = methyl. |
| X—3 | Adduct of Formula I, R° = H, x = 3, y = 1, R = 1,1,3,3-tetramethyl butyl ("tert.-octyl"). [$-C(CH_3)_2CH_2C(CH_3)_3$] |
| X—4 | Adduct of Formula I, R° = H, x = 5, y = 1, R = 1,1,3,3-tetramethyl butyl. |
| N—4 | Adduct of Formula I, R° = H, x = 4, y = 1, R = trimethyl hexyl ("nonyl"). |
| N—5 | Adduct of Formula I, R° = H, x = 5, y = 1, R = trimethyl hexyl. |
| N—6 | Adduct of Formula I, R° = H, x = 6, y = 1, R = trimethyl hexyl. |
| DOP | Dioctyl phthalate |
| DBP | Dibutyl phthalate |
| DIBP | Diisobutyl phthalate |
| DINP | Diisononyl phthalate |
| BIDP | Butyl isodecyl phthalate |
| DPGD | Dipropylene glycol dibenzoate |

It should be noted that commercially available alkyl phenols used to prepare the adducts of Formula I are mixtures of compounds in that R may represent a mixture of isomers, particularly as the number of carbon atoms in the radical increases, and that 'monosubstituted' materials (the preferred case where y is 1) may contain small quantities (up to about 10%) of, usually, disubstituted compounds.

For example, octylphenol contains approximately 85—90% mono-derivative of which about 98% is the para-isomer, the balance being ortho. The dioctyl content is about 5—10%. Nonylphenol contains about 3—5% dinonylphenol and less than 1% of the ortho derivative.

In the case where R is "nonyl", that is, trimethyl hexyl, about 75% is the 1,3,5-trimethyl hexyl isomer on a molar basis, with the remainder being other trimethyl hexyl isomers. The alkyl phenols used in preparing the adducts are usually mixtures of the *meta* or *ortho* and *para* isomers, and may contain small amounts of impurities. In the adducts identified as X—3, X—4, N—4, N—5, and N—6, R is about 90:10 *p:o,* molar basis, with respect to the alkylene oxide substituent. In the X—1 adduct, R is about 80% *para, meta,* with about 2% *ortho* cresol, the remainder being xylenols and other impurities.

## Comparative Example 1

The following prior art formulation is used to prepare a caulk by mixing the components in the order given in a high shear mill, such as a Sigma mixer. Milling time is 90 minutes and the defoamer is added during the last five minutes of mixing. All materials are added directly to the mill without preparing solutions or emulsions of liquid and solid components.

The caulks in the following examples are prepared by the same method from the formulation below by substituting the new plasticizers for that in the formulation. The formulation below may be referred to as the basic formulation.

| Component | Parts |
|---|---|
| EA/MMA/IA 87.5/10/2.5 emulsion copolymer 55% solids* | 430.17 |
| Octyl phenol reacted with ethylene oxide approximately ~1/40 molar ratio, 70% solids (Triton® X—405, emulsifier) | 9.46 |
| Sodium polyphosphate (pigment dispersant) | 10.65 |
| Adduct of cresol reacted with propylene oxide, 1/6 molar ratio (plasticizer)** | 124.21 |
| Mineral solvent thinner ("Varsol"™) | 26.91 |
| Glycidoxypropyltrimethoxy silane (wet adhesion promoter, premixed with plasticizer or solvent) | 0.59 |
| Sodium polymethacrylate, 30% solids in water (pigment dispersant) | 1.27 |
| Ammonium hydroxide 28% | 1.84 |
| Ground calcium carbonate, average 4 μm, oil adsorption 14 (filler) | 692.06 |
| Titanium dioxide (rutile), oil adsorption 24 (pigment) | 17.72 |
| polydimethyl siloxane defoamer, 10% solids (Sag 470TM) | 1.0 |

*EA is ethyl acrylate, MMA is methyl methacrylate, IA is itaconic acid. As elsewhere herein, all parts are by weight unless otherwise specified. The polymer has a minimum film forming temperature of less than 2°C, the $T_g$ is about −9°C, and the pH of the latex is about 4.5. The latex is anionic.
**This plasticizer when used alone, is not as desirable as the plasticizer combination of the invention. For example, cost is a factor. Other factors appear in connection with the examples.

TABLE I

| Example No | Plasticizer | Consistency[1] (sec) | Wood Channel Cracking[2] | Low Temp. Flexibility[3] | | Shore "A" Hardness | | Film Properties[4] | |
|---|---|---|---|---|---|---|---|---|---|
| | | | | −261°C | −17.8°C | Air Dried 2 wk | Air Dried 2 wk + 3 wk 70°C | Tensile Strength kg/m² | Elongation (%) |
| C2 | X—1 | 15 | Pass | Pass | Pass | 8 | 42 | 40778 | 424 |
| C3 | X—3 | very high 300 | complete adhesion loss | Fail | Pass | 5 | 39 | | |
| C4 | X—4 | very high 300 | Pass | | | | | | |
| C5 | N—4 | 174[5] | Pass | Fail | Pass | 0 | 31 | | |
| C6 | N—5 | 156[5] | Adhesion loss | Fail | Pass | 12 | 42 | | |
| C7 | N—6 | 290[5] | Adhesion loss | Fail | Pass | 9 | 41 | | |
| C8 | DOP | 35[6] | Pass | Fail | Pass | 32 | 50 | 85071 | 225 |
| 9 | N—4/DOP 25/75 | 18 | Pass | Pass | Pass | 13 | 42 | 51324 | 303 |
| 10 | N—4/DOP 50/50 | 64 | Pass | Pass | Pass | 0 | 39 | | |
| 11 | X—3/DOP 25/75 | 25 | Pass | Pass | Pass | 17 | 42 | | |
| 12 | X—3/DOP 50/50 | 57 | Pass | Pass | Pass | 12 | 39 | | |

[1]Time to gun a 177.4 ml cartridge under 35153 kg/m² pressure. Consistency given is for freshly made caulk.
[2]19.05 mm × 9.53 mm pine wood channel.
[3]180° bend.
[4]Tensile strength and % elongation at maximum shear.
[5]Consistency increased greatly on aging at R.T. (room temperature, about 21.1°C).
[6]Consistency doubled on aging at R.T.

TABLE II

| Example No | Plasticizer | Consistency (sec) | Wood Channel Cracking[2] | Low Temp. Flexibility[7] | | Shore "A" Hardness | |
|---|---|---|---|---|---|---|---|
| | | | | −26.1°C | −17.8°C | Air Dried 2 wk | Air Dried 2 wk + 3 wk 70°C |
| C13 | N—4 | 174[8] | Pass | Fail | Pass | 12 | 42 |
| C14 | DIBP | 8 | Pass | Pass— | Pass | 48 | 55 |
| 15 | N—4/DIBP 25/75 | 13 | Pass | Pass | Pass | 11 | 47 |
| 16 | N—4/DIBP 50/50 | 31 | Pass | Pass | Pass | 0 | 40 |
| C17 | DINP | 31[8] | Severe cracking | Fail | Fail | 36 | 47 |
| 18 | N—4/DINP 25/75 | 14 | Pass | Fail | Pass | 20 | 40 |
| 19 | N—4 /DINP 50/50 | 45 | Pass | Pass | Pass | 0 | 38 |
| C20 | BIDP | 15 | Pass | Pass | Pass | 45 | 51 |
| 21 | N—4/BIDP 25/75 | 24 | Pass | Pass | Pass | 20 | 49 |
| 22 | N—4/BIDP 50/50 | 62 | Pass | Pass | Pass | 0 | 47 |
| C23 | DPGD | 9 | Pass | Fail | Pass | 30 | 50 |
| 24 | N—4/DPGD 25/75 | 25 | Pass | Fail | Pass | 22 | 53 |
| 25 | N—4/DPGD 50/50 | 29[8] | Pass | Pass | Pass | 7 | 48 |

[7] 25.4 mm diameter mandrel.
[8] Consistency increased greatly on aging at R.T.

Approximate relative costs of some of the materials are of interest.

TABLE III

| Plasticizer | Cost ($/kg bulk) |
|---|---|
| X—1 | $0.34 |
| X—3 | 0.23 |
| N—4 | 0.23 |
| DOP | 0.14 |
| DBP | 0.16 |
| DIBP | 0.16 |
| DINP | 0.14 |
| DPGD | 0.16 |
| BIDP | 0.14 |

These materials are water-immiscible liquids at 21.1°C.

The caulking materials of Tables IV—VI were prepared using the basic formulation but in quantities four times the amount to give 3.785 $dm^3$ samples.

TABLE IV

| Example No | Plasticizer | Consistency (sec) Initial | Consistency (sec) 1 month 50°C | Slump | Tensile (max stress) kg/m² | Wood Channel Cracking RT[9] | Wood Channel Cracking 50°C[9] | Weatherometer 500 hour[10] | Elongation (% at max. stress) |
|---|---|---|---|---|---|---|---|---|---|
| C26 | X—1 | 15 (13)[1] | — (13) | 0 | 40778 | Pass (Pass) | Pass (Pass) | Pass | 424 |
| 27 | N—4/DOP 25/75 | 18 (33) | 25 (42) | 0 | 51324 | Pass (Pass) | Pass (Pass) | Pass | 303 |
| 28 | N—4/DIBP 25/75 | 22 (17) | 25 (20) | 0 | 46403 | Pass (Pass) | Pass (Pass) | Pass | 329 |
| 29 | N—4/DPGD 25/75 | 25 (22) | 31 (23) | 0 | 45700 | Pass (Pass) | Pass (Pass) | Pass | 332 |
| C30 | DOP | 35 (38) | 85 (44) | 0 | 85071 | Pass (Pass) | Pass (Pass) | Pass | 225 |
| C31 | DIBP | 19 (15) | 18 (16) | 0 | 81556 | Pass (Pass) | Pass (Pass) | Pass | 202 |
| C32 | DBGD | 28 (19) | 33 (17) | 0 | 76635 | Pass (Pass) | Pass (Pass) | Pass | 215 |

TABLE IV continued

| Example No | Low Temperature Flex. (–26.1°C)[2] | | | Shore "A" Hardness | | |
|---|---|---|---|---|---|---|
| | 3 days RT | 7 days 50°C | 3 days RT 7 days 50°C Weatherometer 500 hours | 2 weeks RT | 2 weeks RT 3 weeks 70°C | 3 days RT 7 days 50°C Weatherometer 500 hours |
| C26 | Pass | (Pass) | Fail[6] | 0 (22) | 42 (44) | 53 |
| 27 | Pass | (Pass) | Pass | 13 (23) | 42 (47) | 48 |
| 28 | Pass | (Pass) | Pass–[7] | 11 (21) | 42 (48) | 53 |
| 29 | Fail[3] | (Fail[4]) | Pass–[7] | 10 (27) | 46 (49) | 53 |
| C30 | Fail[5] | (Fail[5]) | Fail[8] | 32 (40) | 50 (53) | 57 |
| C31 | Fail[3] | (Fail[4]) | Fail[5] | 27 (32) | 55 (58) | 63 |
| C32 | Fail[5] | (Fail[5]) | Fail[8] | 23 (34) | 51 (55) | 59 |

[1]Values shown in parentheses are repeat preparations made using a different lot of acrylic latex.
[2]Test sequence: film bent around 101.6 mm, 50.8 mm, 25.4 mm diameter cylindrical mandrels, then 180° flex, RT = room temperature (about 21.1°C).
[3]Pass 25.4 mm, fail 180°.
[4]Crack 25.4 mm, fail 180°.
[5]Pass 50.8 mm, fail 25.4 mm.
[6]Pass 101.6 mm, fail 50.8 mm. (Pass– = Pass minus).
[7]Cracking 180°.
[8]Crack 50.8 mm, fail 25.4 mm.
[9]12.7 mm × 19.05 mm.
[10]6.35 mm × 12.7 mm.

TABLE V[1]

| Ex. No. | Plasticizer | Freeze Thaw Stability (cycles passed) | Peel Strength (kg/m) Aluminium Dry | Aluminium Wet | Glass Dry | Glass Wet | Wood Dry | Wood Wet |
|---|---|---|---|---|---|---|---|---|
| C33 | X—1 | 3 | 144.6 CP[3] | O A | 162.5 CP | 44.65 CP | 44.65 A | 5.36 A |
| 34 | N—4/DOP 25/75 | 3 | 37.5 A/LC | O A | 139.3 CP | irr.[2] | 30.36 A | 3.57 A |
| 35 | N—4/DIBP 25/75 | 1 | 37.5 A/LC | O A | 135.7 CP | 1.78 A | 42.86 A/LC | 3.57 A |
| 36 | N—4/DPGD 25/75 | 3 | 60.72 A/LC | O A | 126.8 CP | 35.72 CP | 48.22 A/LC | 5.36 A |
| C37 | DOP | 2 | 23.22 A/LC | O A | 30.36 A/C | 8.93 CP | 19.64 A | 3.57 A |
| C38 | DIBP | 0 | 80.36 CP | O A | 67.86 CP | 14.29 CP | 30.36 A | 12.5 A |
| C39 | DPGD | 0 | 76.79 CP | O A | 80.36 CP | 17.86 CP | 35.72 A | 8.93 A |

[1]Caulks are the same as repeat preparation in Table IV.
[2]Irregular values varied widely in different areas; 25.0 CP, 10.7 CP, 3.57 A.; probably this sample incompletely cured.
[3]A is adhesive failure between the solid substrate and the caulking material.
C is cohesive failure within the body of the caulk layer.
CP is the case in which the adhesion to the substrate is greater than to the fabric top layer.
LC is light cohesive failure of the caulk. Small patches or spots remain on the substrate; failure is thus mostly adhesive.

TABLE VI

Weight Loss of Caulks on Hot Water (at 70°C for 1 month) Extraction[1]

| Example No | Plasticizer | Weight Loss (%)[2] Same Water Throughout | Water Changed Weekly |
|---|---|---|---|
| C40 | X—1 | 3.9 | 6.4 |
| 41 | N—4/DOP (25/75) | 1.8 | 2.1 |
| 42 | N—4/DIBP (25/75) | 4.9 | 5.2 |
| 43 | N—4/DPGD (25/75) | 3.0 | 3.4 |

[1]Caulk samples air dried to constant weight before extraction.
[2]4.5 gm disc of cured caulk, ~6.35 mm thick, extracted in 250 ml water. Plasticizer is about 12% of caulk solids.

In considering the test results of Tables III—VI, it should be borne in mind that the caulks under study were prepared by "plugging in" the various plasticizers in the standard Basic Formulation. No attempt was made, by even minor compounding modifications, to alter properties found wanting.

The results place in perspective the mixtures of alkylphenol/alkylene oxide adducts with ester plasticizers *vis-a-vis* the prior art caulk plasticizer X—1 by itself and the ester plasticizers themselves. Overall the plasticizer combination mixtures approximate X—1 in performance at lower cost and show advantages over the ester plasticizers. This is especially true of the mixture with dioctyl phthalate which is the lowest cost ester plasticizer readily available.

In caulk performance properties reflecting plasticizer efficiency, i.e., Shore hardness, reduction in $T_g$, low temperature flexibility and tensile/elongation the plasticizer mixtures are near matches for X—1 and are superior to the ester plasticizer. In plasticizer permanence the mixtures appear to have advantages over both X—1 and the ester plasticizers (Weatherometer data under LTF and Shore hardness, Table IV, and extraction data, Table VI).

The mixtures show deficiencies in caulk consistency and adhesion. Caulk consistency is higher than is produced with X—1 and varies considerably as DOP source and latex lot is varied, but is affected only slightly by accelerated or natural caulk aging. Caulks, at the consistencies produced by the mixtures, are usable and there is not a serious consistency problem; consistency can be lowered by reducing total solids content, even a very slight lowering in some cases, but must be controlled to avoid seriously affecting shrinkage. Nevertheless, routine study of consistency is justified. Adhesion data reported are for one week drying only, and at this drying time, drying intervals and after minor formulation and mixing procedure modifications are within the realm of routine experimentation.

Herein, whenever a range of values is given, such as "from 1 to 7", "1—7", or "between 1 and 7", it is intended that the range be inclusive of the stated values, in this case, 1 and 7. "(Meth)acrylic" acid refers to methacrylic acid or acrylic acid.

TABLE VII

Properties of Caulks Containing Dioctyl Phthalate/Plasticizer X—1 Mixtures in Place of X—1 Alone

| | | Consistency (sec) | | Wood Channel Crack Resistance | | Low Temp. Flexibility (−26.1°C)[1] | | Shore "A" hardness | | |
|---|---|---|---|---|---|---|---|---|---|---|
| Example No | DOP/X—1 Ratio | Initial | 30 Days 50°C | RT (20° to 22°C) | 50°C | 2 Weeks RT | 2 Weeks 50°C | 2 Weeks RT | 2 Weeks RT + 2 Weeks 50°C | 2 Weeks RT + 3 Weeks 50°C |
| C44 | 100/0 | 34 | 60 | Excellent | Excellent | Failed 180° Flex | Failed 50.8mm Mandrel | 36 | 58 | 52 |
| 45 | 75/25 | 17 | 23 | Excellent | Excellent | Passed 180° Flex | Failed 180° Flex | 35 | 51 | 46 |
| 46 | 50/50 | 15 | 18 | Excellent | Excellent | Passed 180° Flex | Passed 180° Flex | 30 | 52 | 50 |
| 47 | 25/75 | 10 | 12 | Excellent | Excellent | Passed 180° Flex | Passed 180° Flex | 26 | 47 | 45 |
| C48 | 0/100 | 9 | 13 | Excellent | Excellent | Passed 180° Flex | Passed 180° Flex | 25 | 45 | 43 |

[1]Test Sequence: 101.6 mm mandrel, 50.8 mm mandrel, 25.4 mm mandrel, 180° Flex, as in Table IV.

## Claims

1. A putty-like mastic, caulking, or sealant composition containing a binder comprising an elastomeric synthetic polymer containing free carboxylic groups and having a $T_g$ below 10°C and a water insoluble plasticizer, in a weight ratio of plasticizer:binder of from 0.01:1 to 5:1, and optionally containing one or more of an emulsifier, dispersant, organic solvent, base, pigment, filler, dye, defoamer, thickener and adhesion promoter, wherein the plasticizer comprises (1) water-insoluble adduct of ethylene and/or propylene oxide with alkyl-phenol, said adduct having the formula

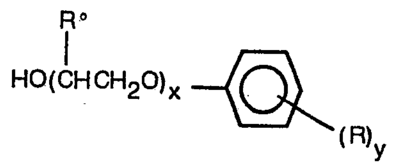

in which R° is H or $CH_3$,
x is an average number of from 1 to 7,
R is $C_1$ to $C_{12}$ alkyl, and
y is 1 or 2, and (2) a water insoluble plasticizer being an ester containing 2 to 4 carboxylic ester groups obtainable by reacting monoalcohol and aliphatic and/or aromatic polycarboxylic acid, or ester of such acid, or by reacting a glycol with a monocarboxylic acid, the weight ratio of (1) to (2) being from 10:90 to 90:10, and the composition having a consistency of from 5 to 100 seconds.

2. A composition as claimed in claim 1 wherein the binder comprises an aqueous latex of an addition polymer containing units of at least one of a 1,3-diene, vinyl acetate and an acrylic and/or methacrylic acid ester.

3. A composition as claimed in claim 2 wherein the polymer contains units of at least one ester of acrylic and/or methacrylic acid with at least one alkanol or alkoxyalkanol containing up to 14 carbon atoms, the $T_g$ of the polymer being less than 10°C.

4. A composition as claimed in any of claims 1 to 3 wherein component (2) comprises an ester of one or more of the following formulae

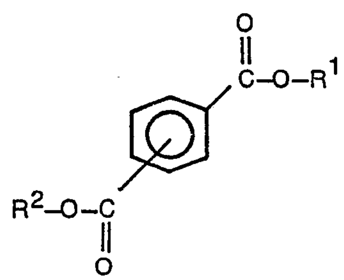

wherein
$R^1$ and $R^2$ are the same or different radicals and are $C_4$—$C_{12}$ alkyl

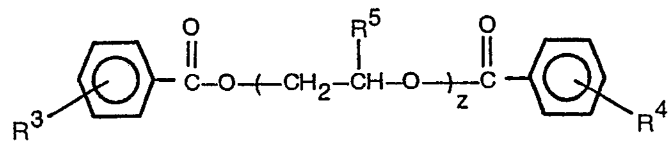

wherein
$R^3$ and $R^4$ are the same or different radicals and are H or $C_1$—$C_{10}$ alkyl,
$R^5$ is H or $CH_3$, and
z is 1 to 3,

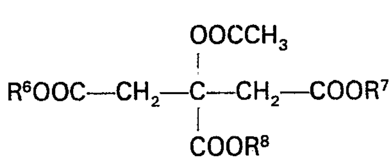

wherein
$R^6$, $R^7$ and $R^8$ are the same or different radicals and are $C_1$—$C_8$ alkyl, and

$$R^9OOC—(CH_2)_m—COOR^{10}$$

wherein

$R^9$ and $R^{10}$ are the same or different radicals and are $C_1$—$C_{10}$ alkyl, and m is 2 to 8.

5. A composition as claimed in any of claims 1 to 4 containing pigment and/or filler in a weight ratio to elastomer of from 1:1 to 5:1 in which the weight ratio of component (1) to component (2) is from 15:85 to 60:40 and the consistency is from 10 to 50 seconds.

6. A composition as claimed in any preceding claim in which the consistency is from 10 to 35 seconds.

7. A composition as claimed in any preceding claim in which R° is H and R is $C_4$—$C_{12}$ alkyl.

8. A composition as claimed in any preceding claim in which x is 2 to 6.

9. A composition as claimed in claim 8 in which x is 3 to 5 and R is $C_8$—$C_{10}$ alkyl.

10. A composition as claimed in any of claims 2 to 9 in which component (2) comprises dioctyl phthalate.

11. A plasticizer composition comprising (1) water-insoluble adduct of ethylene and/or propylene oxide with alkyl phenol, said adduct having the formula:

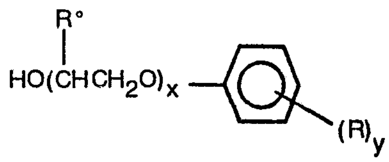

in which R° is H or $CH_3$,

x is an average number of from 1 to 7,

R is $C_1$ to $C_{12}$ alkyl, and

y is 1 or 2, and (2) a water insoluble plasticizer being an ester containing 2 to 4 carboxylic ester groups obtainable by reacting monoalcohol and aliphatic and/or aromatic polycarboxylic acid, or ester of such acid, or by reacting a glycol with monocarboxylic acid, the weight ratio of (1) to (2) being from 10:90 to 90:10.

12. A composition as claimed in claim 11 in which component (2) comprises an ester of one or more of the following formulae:

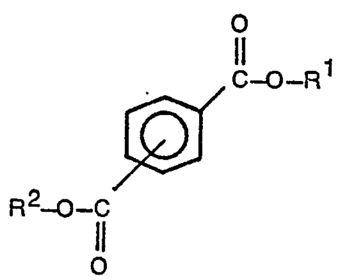

wherein

$R^1$ and $R^2$ are the same or different radicals and are $C_4$—$C_{12}$ alkyl,

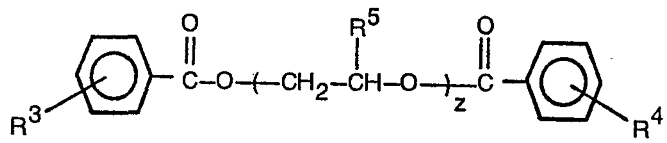

wherein

$R^3$ and $R^4$ are the same or different radicals and are H or $C_1$—$C_{10}$ alkyl,

$R^5$ is H or $CH_3$, and

z is 1 to 3

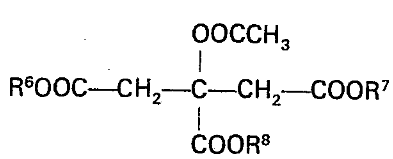

wherein

$R^6$, $R^7$ and $R^8$ are the same or different radicals and are $C_1$—$C_8$ alkyl, and

$$R^9OOC—(CH_2)_m—COOR^{10}$$

wherein

$R^9$ and $R^{10}$ are the same or different radicals and are $C_1—C_{10}$ alkyl, and m is 2 to 8.

13. A composition as claimed in claim 11 or 12 in which the weight ratio of component (1) to (2) is from 15:85 to 60:40.

14. A composition as claimed in any of claims 11 to 13 in which R° is H and R is $C_4—C_{12}$ alkyl.

15. A composition as claimed in any of claims 11 to 14 in which x is 2 to 6.

16. A composition as claimed in claim 15 in which x is 3 to 5 and R is $C_8—C_{10}$ alkyl.

17. A composition as claimed in any of claims 12 to 16 in which component (2) comprises dioctyl phthalate.

**Patentansprüche**

1. Kittähnliche Abdichtungsmasse, enthaltend ein Bindemittel aus einem elastomeren synthetischen Polymeren, das freie Carboxylgruppen enthält und eine Tg unterhalb 10°C besitzt, sowie einen in Wasser unlöslichen Weichmacher in einem Gewichtsverhältnis Weichmacher: Bindemittel von 0,01:1 bis 5:1 sowie gegebenenfalls ein Emulgiermittel, Dispergiermittel, organisches Lösungsmittel, eine Base, ein Pigment, einen Füllstoff, einen Farbstoff, ein Entschäumungsmittel, Eindickungsmittel und/oder Haftpromotor, wobei der Weichmacher aufweist (1) ein in Wasser unlösliches Addukt aus Ethylen- und/oder Propylenoxid mit einem Alkylphenol und das Addukt der Formel

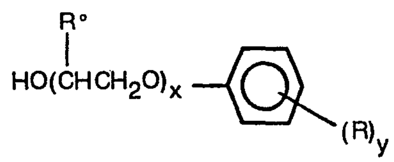

entspricht, worin

R° für H oder $CH_3$ steht,

x eine durchschnittliche Zahl von 1 bis 7 ist,

R $C_1—C_{12}$-Alkyl bedeutet und

y 1 oder 2 ist, und (2) einen in Wasser unlöslichen Weichmacher aus einem Ester, der 2 bis 4 carboxylische Estergruppen enthält, erhältlich durch Umsetzung eines Monoalkohols mit einer aliphatischen und/oder aromatischen Polycarbonsäure oder einem Ester einer derartigen Säure, oder durch Umsetzung eines Glykols mit einer Monocarbonsäure, wobei das Gewichtsverhältnis von (1) zu (2) 10:90 bis 90:10 beträgt und die Masse eine Konsistenz von 5 bis 100 Sekunden aufweist.

2. Masse nach Anspruch 1, dadurch gekennzeichnet, daß das Bindemittel ein wäßriger Latex aus einem Additionspolymeren ist, das Einheiten wenigstens aus einem der Bestandteile 1,3-Dien, Vinylacetat und einem Acrylsäure- und/oder Methacrylsäureester enthält.

3. Masse nach Anspruch 2, dadurch gekennzeichnet, daß das Polymere Einheiten wenigstens eines Esters von Acrylsäure und/oder Methacrylsäure mit wenigstens einem Alkanol oder Alkoxyalkanol, das bis zu 14 Kohlenstoffatome aufweist, enthält, wobei die $T_g$ des Polymeren weniger als 10°C beträgt.

4. Masse nach einem der Ansprüche 1 bis 3, dadurch gekennzeichnet, daß die Komponente (2) aus einem Ester entsprechend einer oder mehreren der folgenden Formeln besteht

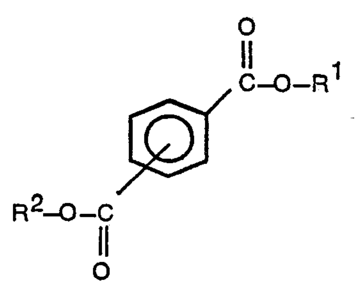

worin $R^1$ und $R^2$ gleiche oder verschiedene Reste sind und für $C_4—C_{12}$-Alkyl stehen,

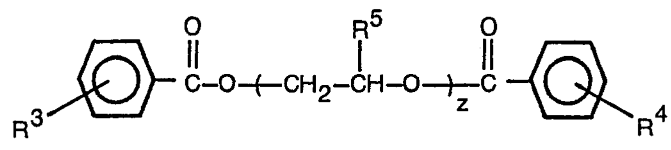

worin $R^3$ und $R^4$ gleiche oder verschiedene Reste sind und H oder $C_1$—$C_{10}$-Alkyl bedeuten,
$R^5$ H oder $CH_3$ ist und
z 1 bis 3 bedeutet

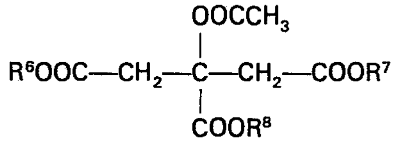

worin $R^6$, $R^7$ und $R^8$ gleiche oder verschiedene Reste sind und für $C_1$—$C_8$-Alkyl stehen und

$$R^9OOC—(CH_2)_m—COOR^{10},$$

worin $R^9$ und $R^{10}$ gleiche oder verschiedene Reste sind und für $C_1$—$C_{10}$-Alkyl stehen und m 2 bis 8 bedeutet.

5. Masse nach einem der Ansprüche 1 bis 4, enthaltend ein Pigment und/oder einen Füllstoff in einem Gewichtsverhältnis zu dem Elastomeren von 1:1 bis 5:1, wobei das Gewichtsverhältnis der Komponente (1) zu der Komponente (2) zwischen 15:85 und 60:40 schwankt und die Konsistenz 10 bis 50 Sekunden beträgt.

6. Masse nach einem der vorhergehenden Ansprüche, dadurch gekennzeichnet, daß die Konsistenz zwischen 10 und 35 Sekunden liegt.

7. Masse nach einem der vorhergehenden Ansprüche, dadurch gekennzeichnet, daß R° für H steht und R $C_4$—$C_{12}$-Alkyl ist.

8. Masse nach einem der vorhergehenden Ansprüche, dadurch gekennzeichnet, daß x für 2 bis 6 steht.

9. Masse nach Anspruch 8, dadurch gekennzeichnet, daß x für 3 bis 5 steht und R $C_8$—$C_{10}$-Alkyl ist.

10. Masse nach einem der Ansprüche 2 bis 9, dadurch gekennzeichnet, daß die Komponente (2) aus Dioctylphthalat besteht.

11. Weichmachermasse aus (1) einem wasserunlöslichen Addukt aus Ethylen- und/oder Propylenoxid mit einem Alkylphenol, wobei das Addukt der Formel

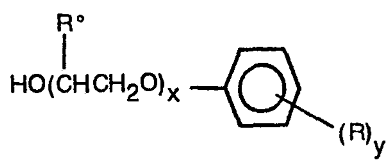

entspricht, worin
R° für H oder $CH_3$ steht,
x eine durchschnittliche Zahl von 1 bis 7 ist,
R $C_1$—$C_{12}$-Alkyl bedeutet und
y 1 oder 2 ist, und (2) einem wasserunlöslichen Weichmacher, bei dem es sich um einen Ester handelt, der 2 bis 4 carboxylische Estergruppen enthält, erhältlich durch Umsetzung eines Monoalkohols mit einer aliphatischen und/oder aromatischen Polycarbonsäure oder einem Ester einer derartigen Säure oder durch Umsetzung eines Glykols mit einer Monocarbonsäure, wobei das Gewichtsverhältnis von (1) bis (2) 10:90 bis 90:10 beträgt.

12. Masse nach Anspruch 11, dadurch gekennzeichnet, daß die Komponente (2) aus einem Ester der folgenden Formeln besteht,

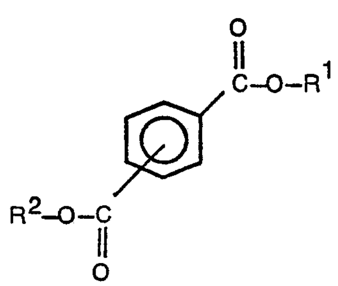

worin $R^1$ und $R^2$ gleiche oder verschiedene Reste sind und für $C_4$—$C_{12}$-Alkyl stehen,

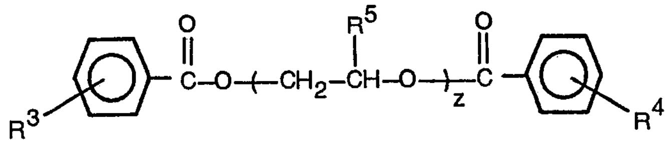

worin $R^3$ und $R^4$ gleiche oder verschiedene Reste sind und für H oder $C_1$—$C_{10}$-Alkyl stehen,
$R^5$ H oder $CH_3$ ist und
z 1 bis 3 bedeutet,

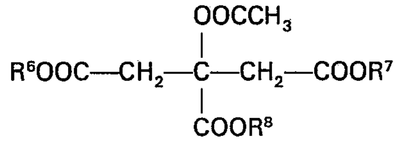

worin $R^6$, $R^7$ und $R^8$ gleiche oder verschiedene Reste sind und für $C_1$—$C_8$-Alkyl stehen und

$$R^9OOC—(CH_2)_m—COOR^{10},$$

worin $R^9$ und $R^{10}$ gleiche oder verschiedene Reste sind und für $C_1$—$C_{10}$-Alkyl stehen, wenn m 2 bis 8 bedeutet.

13. Masse nach Anspruch 11 oder 12, dadurch gekennzeichnet, daß das Gewichtsverhältnis der Komponente (1) zu der Komponente (2) 15:85 bis 60:40 beträgt.

14. Masse nach einem der Ansprüche 11 bis 13, dadurch gekennzeichnet, daß R° für H steht und R $C_4$—$C_{12}$-Alkyl bedeutet.

15. Masse nach einem der Ansprüche 11 bis 14, dadurch gekennzeichnet, daß x für 2 bis 6 steht.

16. Masse nach Anspruch 15, dadurch gekennzeichnet, daß x für 3 bis 5 steht und R $C_8$—$C_{10}$-Alkyl ist.

17. Masse nach einem der Ansprüche 12 bis 16, dadurch gekennzeichnet, daß die Komponente (2) aus Dioctylphthalat besteht.

**Revendications**

1. Composition de calfatage, d'étanchéité ou de mastic ressemblant à un enduit, contenant un liant que comprend un polymère synthétique élastomère portant des groupes carboxyliques libres et ayant une Tg inférieure à 10°C, et un plastifiant insoluble dans l'eau, selon un rapport pondéral de plastifiant:liant de 0,01:1 à 5:1 et contenant éventuellement un ou plusieurs agents tels qu'un émulsifiant, dispersant, solvant organique, base, pigment, charge, colorant, antimousse, épaississant et activateur d'adhérence, caractérisée en ce que le plastifiant comprend (1) un produit d'addition insoluble dans l'eau d'oxyde d'éthylène et/ou de propylène et d'alcoylphénol, ce produit d'addition étant représente par la formule ci-après:

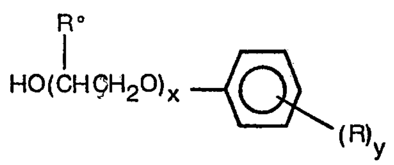

dans laquelle
R° est un atome d'hydrogène ou un radical $CH_3$,
x est un nombre moyen de 1 à 7,
R est un radical alcoyle en $C_1$ à $C_{12}$, et
y est égal à 1 ou 2 et (2) un plastifiant insoluble dans l'eau, étant un ester qui contient 2 à 4 groupes esters carboxyliques, qui peut être obtenu par la réaction d'un monoalcool et d'un acide polycarboxylique aliphatique et/ou aromatique ou un ester d'un tel acide, ou bien par la réaction d'un glycol avec un acide monocarboxylique, le rapport pondéral de (1) à (2) étant de 10:90 à 90:10 et la composition ayant une consistance de 5 à 100 secondes.

2. Composition selon la revendication 1, caractérisée en ce que le liant comprend un latex aqueux d'un polymère d'addition contenant des unités d'au moins du type parmi un 1,3-diène, acétate de vinyle et ester acrylique et/ou méthacrylique.

3. Composition selon la revendication 2, caractérisé en ce que le polymère contient des unités

d'au moins un ester d'acide acrylique et/ou méthacrylique avec au moins un alcanol ou alcoxyalcanol contenant jusqu'à 14 atomes de carbone, la Tg du polymère étant inférieure à 10°C.

4. Composition selon l'une des revendications 1 à 3, caractérisé en ce que le composant (2) comprend un ester représenté par une ou plusieurs des formules suivantes:

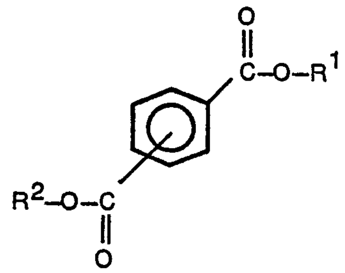

dans laquelle $R^1$ et $R^2$ sont des radicaux identiques ou différents et représentent des groupes alcoyle en $C_4$ à $C_{12}$

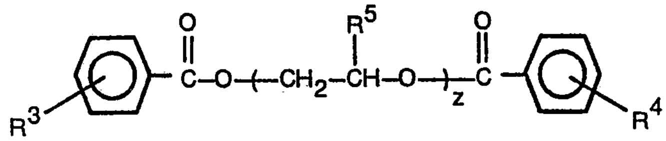

dans laquelle $R^3$ et $R^4$ sont identiques ou différents et représentent un atome d'hydrogène ou un radical alcoyle en $C_1$ à $C_{10}$, $R^5$ est un atome d'hydrogène ou un radical $CH_3$ et z représente un nombre de 1 à 3,

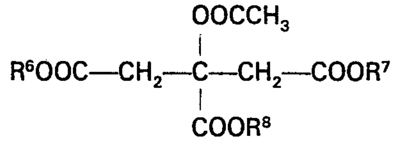

dans laquelle $R^6$, $R^7$ et $R^8$ sont identiques ou différents et représentent das radicaux alcoyle en $C_1$ à $C_8$ et

$$R^9OOC—(CH_2)_m—COOR^{10}$$

dans laquelle $R^9$ et $R^{10}$ sont identiques ou différents et représentent des radicaux alcoyle en $C_1$ à $C_{10}$ et est un nombre de 2 à 8.

5. Composition selon l'une des revendications 1 à 4, caractérisée en ce qu'elle contient un pigment et/ou une charge selon un rapport pondéral à l'élastomère de 1:1 à 5:1, dans laquelle le rapport pondéral du composant (1) au composant (2) est de 15:85 à 60:40 et la consistance est de 10 à 50 secondes.

6. Composition selon l'une des revendications précédentes, caractérisée en ce que la consistance est de 10 à 35 secondes.

7. Composition selon l'une des revendications précédentes, caractérisée en ce que R° est un atome d'hydrogène et R est un radical alcoyle en $C_4$ à $C_{12}$.

8. Composition selon l'une des revendications précédentes, caractérisée en ce que x est un nombre de 2 à 6.

9. Composition selon la revendication 8, caractérisée en ce que x est un nombre de 3 à 5 et R est un groupe alcoyle en $C_8$ à $C_{10}$.

10. Composition selon l'une des revendications 2 à 9, caractérisée en ce que le composant (2) comprend du phtalate de dioctyle.

11. Composition plastifiante caractérisée en ce qu'elle comprend (1) un produit d'addition insoluble dans l'eau d'oxyde d'éthylène et/ou de propylène avec un alcoylphénol, ce produit d'addition étant représenté par la formule générale ci-après:

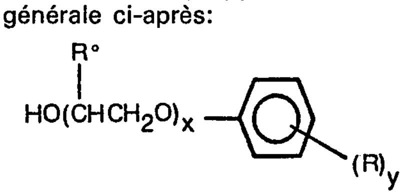

dans laquelle

R° est un atome d'hydrogène ou un radical $—CH_3$,
x est un nombre moyen de 1 à 7,
R est un radical alcoyle de $C_1$ à $C_{12}$, et

y est égal à 1 ou 2, et (2) un plastifiant insoluble dans l'eau qui est un ester contenant 2 à 4 groupes esters carboxyliques, qui peut être obtenu par la réaction d'un monoalcool et d'un acide polycarboxylique aliphatique et/ou aromatique ou un ester d'un tel acide, ou bien par la réaction d'un glycol avec un acide monocarboxylique, le rapport pondéral de (1) à (2) étant de 10:90 à 90:10.

12. Composition selon la revendication 11, caractérisée en ce que le composant (2) comprend un ester représenté par une ou plusieurs des formules suivantes:

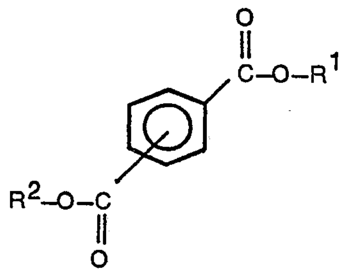

dans laquelle $R^1$ et $R^2$ sont identiques ou différents et représentent des radicaux alcoyle en $C_4$ à $C_{12}$

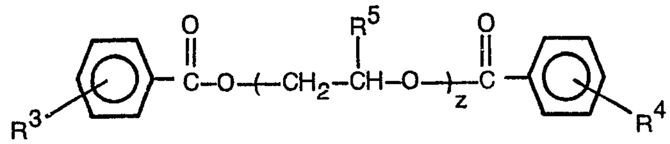

dans laquelle $R^3$ et $R^4$ sont identiques ou différents et représentent un atome d'hydrogène ou un radical alcoyle en $C_1$ à $C_{10}$, $R^5$ est un atome d'hydrogène ou un groupe $CH_3$, et z est un nombre de 1 à 3,

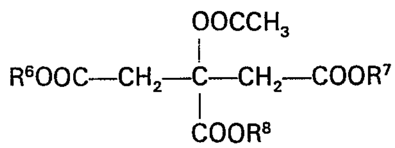

dans laquelle $R^6$, $R^7$ et $R^8$ sont identiques ou différents et représentent des radicaux alcoyle en $C_1$ à $C_8$, et

$$R^9OOC—(CH_2)_m—COOR^{10}$$

dans laquelle $R_9$ et $R_{10}$ sont identiques ou différents et représentent des radicaux alcoyle en $C_1$ à $C_{10}$ et m est un nombre de 2 à 8.

13. Composition selon la revendication 11 ou 12, caractérisée en ce que le rapport pondéral des composants (1) à (2) est de 15:85 à 60:40.

14. Composition selon l'une des revendications 11 à 13, caractérisée en ce que R° est un atome d'hydrogène et R est un radical alcoyle en $C_4$ à $C_{12}$.

15. Composition selon l'une des revendications 11 à 14, caractérisée en ce que x est un nombre de 2 à 6.

16. Composition selon la revendication 15, caractérisée en ce que x est un nombre de 3 à 5 et R est un radical alcoyle en $C_8$ à $C_{10}$.

17. Composition selon l'une des revendications 12 à 16, caractérisée en ce que le composant (2) comprend du phtalate de dioctyle.